(19) Europäisches Patentamt
European Patent Office
Office européen des brevets

(11) Veröffentlichungsnummer: **0 043 035**
**B1**

(12) # EUROPÄISCHE PATENTSCHRIFT

(45) Veröffentlichungstag der Patentschrift: **15.02.84**

(51) Int. Cl.³: **B 27 K 3/50**

(21) Anmeldenummer: **81104681.2**

(22) Anmeldetag: **19.06.81**

(54) **Mittel zum Konservieren von Holz und Holzwerkstoffen.**

(30) Priorität: **28.06.80 DE 3024467**

(43) Veröffentlichungstag der Anmeldung: **06.01.82 Patentblatt 82/1**

(45) Bekanntmachung des Hinweises auf die Patenterteilung: **15.02.84 Patentblatt 84/7**

(84) Benannte Vertragsstaaten: **AT BE CH DE FR GB IT LI LU NL SE**

(56) Entgegenhaltungen:
**DE - A - 2 644 077**
**FR - A - 2 251 417**
**FR - A - 2 355 451**
**US - A - 4 062 991**

**Die Akte enthält technische Angaben, die nach dem Eingang der Anmeldung eingereicht wurden und die nicht in dieser Patentschrift enthalten sind.**

(73) Patentinhaber: **Desowag-Bayer Holzschutz GmbH., Ross-Strasse 76, D-4000 Düsseldorf 1 (DE)**

(72) Erfinder: **Koddebusch, Hubert, Dr. Dipl.-Chem, Leibnitzstrasse 14, D-4130 Moers 1 (DE)**
Erfinder: **Grüning, Rainer, Dr. Dipl.-Chem, Franz-Hitze-strasse 14, D-4150 Krefeld 1 (DE)**
Erfinder: **Metzner, Wolfgang, Dr. Dipl.-Chem, Buschstrasse 151, D-4150 Krefeld-Bockum (DE)**

(74) Vertreter: **Seiler, Siegfried, DEUTSCHE SOLVAY WERKE GmbH Langhansstrasse 6, D-5650 Solingen 11 (DE)**

EP 0 043 035 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Mittel zum Konservieren von Holz und Holzwerkstoffen

Die vorliegende Erfindung betrifft ein Mittel zum Konservieren von Holz und Holzwerkstoffen, bestehend aus 0,1-10 Gew.-%, vorzugsweise 3-8 Gew.-%, eines in einem organischen, schwerflüchtigen Lösungsmittel mit einer Verdunstungszahl über 35 und einem Flammpunkt oberhalb 30° C löslichen Fungizides oder Fungizidgemisches und/oder 0,3-8 Gew.-%, vorzugsweise 1-5 Gew.-%, eines in einem organischen, schwerflüchtigen Lösungsmittel mit einer Verdunstungszahl über 35 und einem Flammpunkt oberhalb 30° C löslichen Insektizides oder Insektizidgemisches und 1-30 Gew.-%, vorzugsweise 3-15 Gew.-%, eines Alkydharzes (berechnet auf Feststoffgehalt) und mehr als 45 Gew.-%, vorzugsweise mehr als 65 Gew.-%, eines organischen, schwerflüchtigen Lösungsmittels oder Lösungsmittelgemisches mit einer Verdunstungszahl über 35 und einem Flammpunkt oberhalb 30° C, wobei als Alkydharz ein niedrigviskoses Alkydharz mit einem ganz bestimmten Viskositätsbereich eingesetzt wird.

Es ist bereits bekannt, in Mitteln zum Konservieren von Holz und Holzwerkstoffen, insbesondere in öligen und ölartigen Lösungsmitteln gelöste organisch-chemische Fungizide und/oder organisch-chemische Insektizide, ein Bindemittel und/oder Fixierungsmittel, u.a. auch Alkydharze, einzusetzen (vgl. u.a. DE-A 2555984, Spalte 5, Zeilen 61-63 und DE-A 2644077). Dabei werden im allgemeinen ölige Alkydharzlösungen mit einem Alkydharzgehalt bis zu 60% und einer Viskosität von über 2.500 mPa·s (gemessen in Testbenzin) eingesetzt. Die Alkydharze wirken dabei als Porenfüller und/oder Bindemittel bzw. Fixierungsmittel, indem sie auf der Holzoberfläche verbleiben.

Gemäss US-A 4062991 verwendet man innerhalb eines Doppelvakuumverfahrens in dem Holzschutzmittel ein luftoxidierendes Mittel, wobei als luftoxidierendes Mittel langölige Alkydharze und/oder kolloidale Pigmente eingesetzt werden. Auch diese gemäss dieser Patentschrift eingesetzten langöligen Alkydharze dienen zu einer verbesserten Bindung des nachfolgenden Anstriches bzw. des sich bildenden Films an der Oberfläche des Holzwerkstoffes (vgl. Spalte 1, u.a. Zeile 64), so dass es sich ebenfalls um höherviskose langölige Alkydharze handelt, die im wesentlichen auf der Holzoberfläche verbleiben.

In den Holzschutzmitteln zeigen jedoch die Alkydharze einen grossen Nachteil, denn sie beeinträchtigen die Eindringtiefen der mit diesen Harzen hergestellten Holzschutzmittel im behandelten Holz und damit auch die Eindringtiefen der fungiziden und/oder insektiziden Wirkstoffe. Andererseits ist gerade die Tiefenwirkung der Wirkstoffe von Holzschutzmitteln von besonderer Bedeutung, da beispielsweise bei einer oberflächenhaften Beschädigung des Holzes ein unzureichender Schutz bei einer Anreicherung der Wirkstoffe nur auf der Holzoberfläche gegeben ist.

Ziel und Aufgabe der vorliegenden Erfindung war es daher, die vorgenannten Nachteile zu vermeiden und ein Holzschutzmittel zu finden, das trotz dem Vorhandensein eines Bindemittelanteiles auch eine gute Tiefenwirkung aufweist. Jedoch sollte aufgrund der guten porenfüllenden Eigenschaften und aufgrund der guten Bindemitteleigenschaften der Alkydharze sowie der allgemeinen guten Anstrichverträglichkeit (z.B. bei Nachanstrichen) auf die Verwendung der Alkydharze in Holzkonservierungsmitteln nicht verzichtet werden. Es sollte ein Holzkonservierungsmittel mit verbesserten Eigenschaften erhalten werden. Das Eindringvermögen der Wirkstoffe des Holzkonservierungsmittels sollte auch bei Vorhandensein der Alkydharze nicht beeinträchtigt werden.

Erfindungsgemäss wurde festgestellt, dass diesen Zielen und Aufgaben ein Mittel zum Konservieren von Holz und Holzwerkstoffen gerecht wird, bestehend aus I. mehr als 45, vorzugsweise mehr als 65 Gew.-%, eines organischen, schwerflüchtigen Lösungsmittels oder Lösungsmittelgemisches mit einer Verdunstungszahl über 35 und einem Flammpunkt oberhalb 30° C, II. 0,1-10, vorzugsweise 3-8 Gew.-%, eines in dem Lösungsmittel löslichen Fungizides oder Fungizidgemisches und/oder III. 0,3-8, vorzugsweise 1-5 Gew.-%, eines in dem Lösungsmittel löslichen Insektizides oder Insektizidgemisches und IV. 1-30, vorzugsweise 3-15 Gew.-%, eines Alkydharzes (berechnet als Feststoffgehalt). Als Alkydharz wird jedoch gemäss der Erfindung ein niedrigviskoses Alkydharz oder eine niedrigviskose Alkydharzlösung verwendet mit einer Viskosität von 1.000 bis 2.200 mPa·s (entspr. cP), vorzugsweise 1.200 bis 1.800 mPa·s (cP), gemessen in Testbenzin, mit einem Siedebereich von 180-215° C, bei einem 80 bis 100%igen Harzgehalt (bei 100% Harzgehalt ohne zusätzliche Lösungsmittel) bei 20° C, wobei das Alkydharz mit einem oder mehreren zwei- oder dreiwertigen Alkoholen mit einer C-Zahl unter 8, vorzugsweise einer C-Zahl von 2 bis 5, verestert ist.

Gemäss der Erfindung wird als niedrigviskoses Alkydharz oder als niedrigviskose Alkydharzlösung ein langöliges Alkydharz oder ein langöliges Urethanalkydharz mit einem Ölgehalt von grösser als 60 Gew.-%, vorzugsweise mit einem Ölgehalt von 65 bis 80 Gew.-% (bezogen auf 100 Gew.-% Alkydharz), im Holzkonservierungsmittel eingesetzt.

Erfindungsgemäss wurde festgestellt, dass das Holzkonservierungsmittel unter Verwendung des niedrigviskosen Alkydharzes in das Holz gut eindringt und das Alkydharz die Eindringtiefe der Wirkstoffe nicht oder nur unwesentlich beeinträchtigt. Dieses Ergebnis zeigt sich auch dann, wenn innerhalb von 10 bis 24 Stunden eine völlige Durchtrocknung des Holzes erfolgt ist. Das im Holzkonservierungsmittel enthaltene niedrigviskose Alkydharz wird gemäss der vorliegenden Patentanmeldung nicht bei hohen Temperaturen,

sondern bei Normaltemperatur in Gegenwart von Katalysatoren, Sikkativen und dgl., z.B. Kobaltoctoat, polymerisiert bzw. kondensiert.

Holzschutzmittel, die Alkydharze entsprechend der Erfindung enthalten, sind auch geeignet für die Imprägnierung von Bauholz nach dem Kesseldruck- bzw. Vakuum-Druckverfahren.

Nach einer bevorzugten Ausführungsform ist in dem Holzschutzmittel zusätzlich ein Weichmacher für das Alkydharz und/oder ein hochsiedendes Lösungsmittel für das Alkydharz und/oder anlösendes Mittel für Alkydharz, vorzugsweise ein organischer Ester oder Glycoläther, in Gew.-Mengen von 20 bis 60 Gew.-%, vorzugsweise 25 bis 50 Gew.-%, bezogen auf die Gesamtmenge des eingesetzten Alkydharzes (berechnet als Feststoff), enthalten. Diese Gewichtsmengen ersetzen gleiche Gewichtsteile des organischen schwerflüchtigen Lösungsmittels.

Nach dieser Ausführungsform wird die ohnehin unter Verwendung des niedrigviskosen Alkydharzes gegenüber den üblichen Alkydharzen verbesserte Eindringtiefe der Wirkstoffe des Holzkonservierungsmittels noch weiter erhöht.

Als niedrigviskoses Alkydharz oder als niedrigviskose Alkydharzlösung wird nach einer bevorzugten Ausführungsform ein langöliges Alkydharz eingesetzt, das unter Mitverwendung von Isophthalsäure und/oder Terephthalsäure oder deren zu Alkydharz umsetzbaren Derivaten hergestellt wurde.

Nach dieser Ausführungsform ergeben sich ebenfalls Verbesserungen des unter Verwendung dieser Alkydharze hergestellten Holzkonservierungsmittels, insbesondere im Hinblick auf die Eindringtiefe sowie weiterhin auf die Löslichkeit der organischen Wirkstoffe in der Alkydharzlösung.

Nach einer besonders zweckmässigen Ausführungsform ist das niedrigviskose Alkydharz bzw. die niedrigviskose Alkydharzlösung in dem Holzkonservierungsmittel zu 1 bis 40 Gew.-%, vorzugsweise zu 5 bis 25 Gew.-% (berechnet auf 100 Gew.-% Alkydharz — Feststoff), durch ein höherviskoses bzw. stark vorkondensiertes Alkydharz ersetzt. Nach dieser Ausführungsform kann je nach dem Gehalt des zu ersetzenden niedrigviskosen Alkydharzes und der Zusammensetzung der holzschützenden Wirkstoffe ein Holzkonservierungsmittel erhalten werden, das noch ein gutes Eindringvermögen der Wirkstoffe aufweist, eine gewisse Bindung von Wirkstoffen auf der Holzoberfläche sowie eine gute Porenfüllung und auch sonst eine verbesserte Überstreichbarkeit zeigt. Nach dieser Ausführungsform wird bevorzugt als höherviskoses Alkydharz ein Alkydharz verwendet, das in einer ca. 60%igen Lösung in Testbenzin mit einem Siedebereich von 180 bis 215° C, eine Viskosität von grösser als 2.200 mPa·s, gemessen bei 20° C, aufweist.

Als organische schwerflüchtige Lösungsmittel werden vorteilhaft wasserunlösliche oder kaum wasserlösliche Lösungsmittel bzw. Lösungsmittelgemische eingesetzt. Bevorzugt gelangen ölige oder mineralölhaltige oder ölartige Lösungsmittel mit einer Verdunstungszahl über 35 und einem Flammpunkt oberhalb 30° C, vorzugsweise oberhalb 55° C, zum Einsatz.

Als derartige Lösungsmittel werden entsprechende Mineralöle oder deren Aromatenfraktionen oder mineralölhaltige Lösungsmittelgemische, vorzugsweise Testbenzin, Petroleum, Gasöl und/oder Alkylbenzole usw. verwendet.

Vorzugsweise gelangen Mineralöle mit einem Siedebereich von 150 bis 220° C, Testbenzin mit einem Siedebereich von 170 bis 220° C, Spindelöl mit einem Siedebereich von 250 bis 350° C, Petroleum bzw. Aromaten vom Siedebereich 160 bis 260° C, Terpentinöl und dergleichen zum Einsatz.

Die Wirkstoffe gemäss des erfindungsgemässen Holzkonservierungsmittels dringen in das Holz ein und werden dort von dem niedrigviskosen Alkydharz fixiert. Gleichzeitig wird eine hohe Verweilzeit und damit eine grössere Langzeitwirkung der holzschützenden Wirkstoffe in dem Holz erzielt. Zusätzlich wird unter Verwendung des erfindungsgemässen Mittels zum Konservieren von Holz und Holzwerkstoffen die Abgaberate an Wirkstoffen pro Zeiteinheit in die Raumluft stark verringert, das bedeutet wiederum geringere gesundheitliche Belastung durch das Holzschutzmittel, da durch die Fixierung der Wirkstoffe nur eine geringere Raumluftkonzentration dieser Stoffe erreicht werden kann. Falls die niedrigviskosen Alkydharze in dem Holzkonservierungsmittel vorwiegend als Fixierungsmittel für die Wirkstoffe dienen sollen und weniger als Bindemittel und Porenfüller, werden gemäss der vorliegenden Erfindung bevorzugt solche niedrigviskosen Alkydharze, die mit zweiwertigen Alkoholen, z.B. Glykol, verestert sind, eingesetzt. Im Mittel zum Konservieren von Holz und Holzwerkstoffen bleiben die mit den zweiwertigen Alkoholen veresterten niedrigviskosen Alkydharze auch nach der Oxidationspolymerisation flüssig oder weich und zeigen eine hervorragende Eindringtiefe im Holz und eine sehr gute Fixierung der Wirkstoffe.

Soll das Mittel zum Konservieren von Holz und Holzwerkstoffen neben fixierenden Eigenschaften auch porenfüllende Eigenschaften aufweisen, so wird in dem Holzkonservierungsmittel als Alkydharz ein niedrigviskoses, mit dreiwertigen Alkoholen verestertes Alkydharz eingesetzt.

Erfindungsgemäss wurde weiterhin festgestellt, dass eine Kombination der niedrigviskosen Alkydharze, die mit zweiwertigen Alkoholen verestert sind, mit niedrigviskosen Alkydharzen, die mit dreiwertigen Alkoholen verestert sind, im Verhältnis von 20:1 bis 1:20, vorzugsweise 10:1 bis 1:10, vorteilhaft ist. Weiterhin können auch Alkydharze eingesetzt werden, die bereits von vornherein sowohl mit zweiwertigen als auch mit dreiwertigen Alkoholen verestert sind.

Im Rahmen der Erfindung wurde weiterhin festgestellt, dass nach einer anderen Ausführungsform 1 bis 40 Gew.-%, vorzugsweise 5 bis 25 Gew.-% (berechnet auf 100 Gew.-% Alkydharz — berechnet als Feststoff) des niedrigviskosen Alkydharzes bzw. der niedrigviskosen Alkyldharzlösung in dem Holzkonservierungsmittel durch

Kolophoniumester und/oder Zinkharze und/oder Calciumverbindungen des Kolophoniums und/ oder andere harzartige Salze der Abietinsäure und/ oder Cumaronharze und/oder Tallölester ersetzt werden können. Holzkonservierungsmittel mit dieser Zusammensetzung sind für holzschützende Imprägnierungen geeignet.

Als Weichmacher für das Alkydharz werden u.a. Alkyl-, Aryl- oder Aralkylphthalate, vorzugsweise Dibutyl- oder Dioctylphthalate, Phosphorsäureester, vorzugsweise Tributylphosphat, Oleate, Alkyloleate, vorzugsweise Butyloleat, Bis-(dimethylbenzyl)äther, p-Toluolsulfonsäureäthylester, Glycerinester, Glycerinäther oder höhermolekulare Glykoläther verwendet.

Als hochsiedende flüssige Säureester oder Säureäther werden Phthalsäureester, Phosphorsäureester und/oder Polyglykoläther u.a. eingesetzt.

Zusätzlich können an sich bekannte Farbstoffe, Pigmente, insbesondere feinteilige Pigmentpasten, wasserabweisende Mittel, Geruchskorrigentien und Inhibitoren bzw. Korrosionsschutzmittel, Markierungsmittel und dergleichen eingesetzt werden. In besonderen Fällen können die an sich bekannten wasserabweisenden Mittel u.a. Wachse, Wollfett und dergleichen in Gewichtsmengen von 0,2-5 Gew.-%, vorzugsweise 0,5-2 Gew.-%, bezogen auf das Holzschutzmittel, Verwendung finden. Als Markierungsmittel können beispielsweise organische Lithiumverbindungen eingesetzt werden. Nach einer Ausführungsform werden 0,01 bis 0,03 Gew.-% einer organischen und öllöslichen Lithiumverbindung verwendet.

Evtl. auftretende Korrosionserscheinungen an Eisen und Buntmetallen, die mit dem Holzkonservierungsmittel in Berührung kommen, können durch Zugabe von Korrosionsschutzmitteln, z.B. Mandelsäure und/oder Benzotriazol als Inhibitor, verhindert werden. Nach dieser Ausführungsform wird das Benzotriazol bzw. die Mandelsäure in Gewichtsmengen von 0,01 bis 0,5 Gew.-%, vorzugsweise 0,05 bis 0,1 Gew.-%, eingesetzt.

Als Insektizide werden die an sich bekannten, in den öligen bzw. ölartigen organisch-chemischen Lösungsmitteln bzw. Lösungsmittelgemischen löslichen Insektizide bzw. Insektizidgemische verwendet, z.B. Carbamate, insektizid wirksame chlorierte Kohlenwasserstoffe und Phosphorsäureester, vorzugsweise die insektizid wirksamen Alkoxyphenyl-N-alkyl-carbamate und/oder Alkylphenyl-N-alkyl-carbamate bzw. halogenierte oder halogengruppenfreie Thiophosphorsäureester bzw. -phosphonsäureester, sowie Lindan.

Als fungizide Wirkstoffe werden die an sich bekannten, in den öligen oder ölartigen organisch-chemischen Lösungsmitteln bzw. Lösungsmittelgemischen löslichen Fungizide verwendet. Hinsichtlich der fungiziden Wirkstoffe hat es sich ergeben, dass diese je nach Art des Fungizides in unterschiedlichen Konzentrationen einzusetzen sind. In einer Ausführungsform wurden 0,1-10 Gew.-%, vorzugsweise 3-8 Gew.-% Chlorphenol, vorzugsweise Penta- und/oder Tetrachlorphenol, als Fungizid verwendet. In einer anderen Ausführungsform wurden die fungiziden 1-Trityl-1,2,4-triazole im Holzkonservierungsmittel eingesetzt.

Besonders gute Wirkungen wurden unter Verwendung des Bis-phenyl-(3-trifluormethylphenyl)-1-(1,2,4-triazolyl)-methans zum Konservieren von Holz und Holzwerkstoffen erzielt.

Eine vorzugsweise Ausführungsform besteht darin, dass man den vorgenannten Wirkstoff ganz oder teilweise durch ein anderes Fungizid oder Fungizidgemisch ersetzt. Als solches verwendet man vorzugsweise das N,N-Dimethyl-N'-phenyl-(N'-fluordichlormethylthio)-sulfamid der Formel

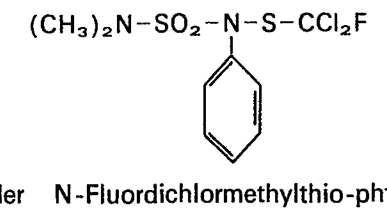

und/oder N-Fluordichlormethylthio-phthalimid der Formel

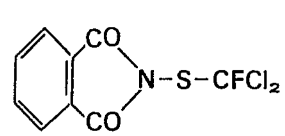

Nach einer Ausführungsform verfährt man dabei so, dass man den erstgenannten Wirkstoff bis zu 80 Gew.-%, vorzugsweise bis zu 50 Gew.-%, durch ein anderes Fungizid oder ein Fungizidgemisch, ersetzt. Derartige Mischungen eignen sich insbesondere zur gleichzeitigen Bekämpfung von holzzerstörenden Filzen und holzverfärbenden Pilzen, wie z.B. den Bläuepilzen.

Es ist auch möglich, andere in dem organisch-chemischen schwerflüchtigen, öligen oder ölartigen Lösungsmittel mit einer Verdunstungszahl von über 35 und einem Flammpunkt von über 30° C lösliche Fungizide oder Mischungen dieser mit den vorgenannten Fungiziden zu verwenden, z.B. fungizide öllösliche Naphthenate, vorzugsweise Zink- und/oder Kupfernaphthenate; 8-Oxychinolin bzw. dessen fungizide öllösliche Salze oder Derivate, vorzugsweise Phenylquecksilber-8-oxychinolat; fungizide Verbindungen bzw. Derivate oder Gemische von Chlorphenolen, vorzugsweise Verbindungen oder Gemische von Penta- und/oder Tetrachlorphenol mit schwerflüchtigen Aminen, z.B. Rosinamin; Nitrophenole bzw. Nitrochlorphenole und/oder Nitrochlorbenzole, insbesondere 1,2-Dinitrotetrachlorbenzol und/oder Benzimidazol-2-carbamidsäuremethylester und/oder öllösliche fungizid wirksame metallhaltige organische Verbindungen, z.B. von Kupfer, Zink, Mangan, Kobalt, Chrom oder Quecksilber, z.B. in Form von Caprylaten, Naphthenaten, Oleaten und dgl.; fungizide Salze des N-Nitroso-N-cyclohexylhydroxylamins bzw. eine (N-Cyclohexyl-diazeniumdioxy)-Verbindung eines ein-, zwei- oder dreiwertigen Metalles, vorzugsweise Tris-(N-cyclohexyldiazeniumdioxy)-aluminium.

Nach einer besonders vorteilhaften Ausführungsform enthält das Holzkonservierungsmittel

0,3-8 Gew.-%, vorzugsweise 1-5 Gew.-%, eines Insektizidgemisches, bestehend aus mindestens einem in einem organisch-chemischen schwerflüchtigen oder ölartigen Lösungsmittel mit einer Verdunstungszahl über 35 und einem Flammpunkt über 30° C löslichen insektiziden Alkoxyphenyl-N-alkyl-carbamat und/oder Alkylphenyl-N-alkylcarbamat und mindestens einem in einem organisch-chemischen schwerflüchtigen oder ölartigen Lösungsmittel mit einer Verdunstungszahl über 35 und einem Flammpunkt über 30° C löslichen insektiziden halogenierten oder halogengruppenfreien Thiophosphorsäureester bzw. insektiziden Thionophosphorsäureester bzw. insektiziden Thionophosphonsäureester der allgemeinen Formel

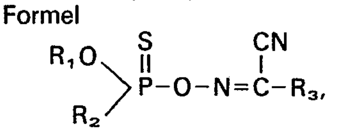

wobei in der Formel $R_1$ ein Alkylrest mit 1-4 C-Atomen, $R_2$ ein Alkylrest oder eine Alkoxygruppe mit 1-4 C-Atomen oder ein Phenylrest und $R_3$ ein Phenylrest oder ein durch 1-3 Halogenatome oder durch niedere Alkyl- oder Alkoxygruppen substituierter Phenylrest bedeutet, wobei in dem Insektizidgemisch das Carbamat bzw. Carbamatgemisch zu dem Thiophosphorsäureester bzw. Thionophosphorsäureester bzw. Thionophosphonsäureester oder -gemische im Gewichtsverhältnis 3:1 bis 1:3, vorzugsweise 1:0,75 bis 1:2, enthalten ist.

Bevorzugt enthält das Insektizidgemisch ein Alkoxyphenyl-N-alkylcarbamat der allgemeinen Formel

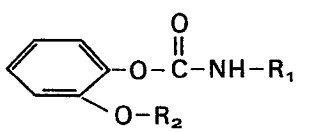

und/oder ein Alkylphenyl-N-alkylcarbamat der allgemeinen Formel

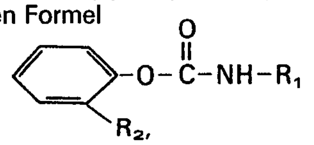

worin jeweils für $R_1$ ein Alkylrest mit 1-4 C-Atomen, vorzugsweise ein Methylrest steht und für $R_2$ ein Alkylrest mit 1-5 C-Atomen, vorzugsweise ein Alkylrest mit 3 oder 4 C-Atomen, steht.

Als halogenierter oder halogengruppenfreier Thionophosphorsäureester wird ein Ester der Formel

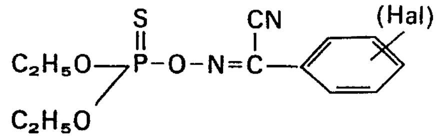

vorzugsweise O,O-Diäthyl-O-(α-cyanbenzylidenamino)thionophosphat und/oder (Diäthoxythiophosphoryloximino)-2-chlorphenylacetonitrilverwendet.

Zweckmässig wird ein Gemisch bestehend aus 2-Isopropoxyphenyl-N-methylcarbamat und/ oder Butylphenyl-N-methylcarbamat und einem insektiziden, halogenierten oder halogengruppenfreien Thionophosphorsäureester der Formel

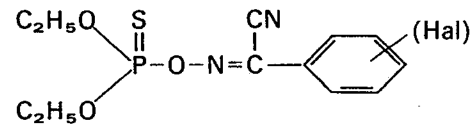

vorzugsweise O,O-Diäthyl-O-(α-cyanbenzyl idenamino)thionophosphat und/oder (Diäthoxythiophosphoryl-oximino)-2-chlorphenyl-acetonitril eingesetzt.

Als vorteilhaft haben sich niedrigviskose Alkydharze bzw. Harzlösungen erwiesen, die durch Veresterung bzw. Umesterung von Leinöl bzw. Sojaöl mit Phthalsäureanhydrid und evtl. Glyzerin und ohne bzw. mit wenig Pentaerythrit hergestellt worden sind. Besonders vorteilhaft sind Alkydharze auf der Basis von Isophthalsäure bzw. Terephthalsäure. Der Ölgehalt der Harze soll 65-80% betragen.

Es wurden Vergleichsversuche zur Überprüfung der Eindringtiefe und der biologischen Wirkung gegen Pilzangriffe durchgeführt, wobei einerseits ein Holzschutzmittel gemäss der Erfindung und andererseits ein Holzschutzmittel mit der gleichen Zusammensetzung, jedoch mit einer höheren Viskosität eingesetzt wurde. Da unter anderem verlangt wird, dass beispielsweise die fungizide Prüfung nach dem Abhobeln von 2 mm von der behandelten Holzoberfläche noch Wirksamkeit zeigt, wurden innerhalb der Vergleichsversuche entsprechende Abhobeltests durchgeführt (s. auch Tabelle 1). Bei diesem Versuch wurde ein Holzschutzmittel mit 12,5 Gew.-% Alkydharz (berechnet als Feststoff) zugrunde gelegt, das folgende Zusammensetzung aufweist:

| | |
|---|---|
| Pentachlorphenol | 5,5 Gew.-% |
| Lindan | 0,5 Gew.-% |
| aromatische Lösungsmittel vom Siedebereich: 180-210° C | 25,0 Gew.-% |
| Testbenzin vom Siedebereich: 180-215° C | 56,4 Gew.-% |
| Trockenstoff (Sikkativ) | 0,1 Gew.-% |
| Alkydharz mit Leinöl modifiziert (berechnet als Feststoff) | 12,5 Gew.-% |

Bei dem Produkt A wurde (gemäss der Erfindung) ein mit Leinöl modifiziertes Alkydharz (80% Alkydharzgehalt in Testbenzin) mit einer Viskosität von 1.400 mPa·s (cP) eingesetzt. Als Produkt B wurde ein Alkydharz mit höherer Vorpolymerisierung eingesetzt, das eine Viskosität in 60%iger Lösung in Testbenzin von 2.500 mPa·s (cP) aufwies. Als Testbenzin für die Viskositätsbestimmung wurde ein Testbenzin im Siedebereich von 180-215° C eingesetzt. Für die Viskositätsbestimmungen wurde ein Rotationsviskosimeter benutzt.

*Tabelle 1*

1. *Eindringungstest (nach DIN 52618)*

| | Versuch 1 | Versuch 2 |
|---|---|---|
| Produkt A | a) 9,5 mm | b) 9,9 mm |
| Produkt B | a) 6,5 mm | b) 5,9 mm |

2. *Biologische Wirkung gegen Pilze bei einer Auftragsmenge von 200 g/m² des Holzschutzmittels (nach DIN 52176)*

Anzahl der Klötzchen mit Pilzangriff von 4 Parallelen:

| | Produkt A | Produkt B |
|---|---|---|
| Abhobeltiefe (mm) | 0 1 2 3 | 0 1 2 3 |
| Coniophora puteana | 0 0 0 0 | 0 0 2 2 |
| Poria placenta | 0 0 0 1 | 0 0 1 3 |

Aus der Tabelle 1 (Eindringungstest) geht hervor, dass bei gleicher Beschaffenheit des Kiefernsplintholzes bei einem holzschützenden Grundiermittel mit einem stärker vorpolymerisierten Alkydharz die Eindringung des Mittels von 5,9 bzw. 6,5 mm dann auf 9,5 bis 9,9 mm ansteigt, wenn entsprechend der Erfindung ein niedrigviskoses Alkydharz oder eine niedrigviskose Alkydharzlösung mit einer Viskosität von 1.000-1.200 mPa·s, vorzugsweise 1.200-1.800 mPa·s, eingesetzt wird. In entsprechender Weise wird auch die fungizide Wirkung des Mittels nach dem Abhobeln von 1,2 und 3 mm bei einer Auftragsmenge von 200 g/cm² des Holzschutzmittels verbessert.

Bei dem Prüfpilz Coniophora puteana sind nach dem Abhobeln von 1-3 mm alle Prüfklötzchen bei dem Mittel gemäss Erfindung ohne jeglichen Angriff. Bei einem entsprechenden Holzschutzmittel B sind nach dem Abhobeln von 2 mm schon 2 der Prüfklötzchen vom Pilz angegriffen worden.

Gegenüber dem Prüfpilz Poria placenta ist bei dem Produkt nach 3 mm Abhobeln ein Prüfklötzchen befallen, während bei dem Mittel B schon nach 2 mm Abhobeln 1 Klötzchen und nach dem Abhobeln von 3 mm schon 3 Klötzchen befallen sind.

Die Eindringtiefe und damit die Wirkungstiefe von Mitteln der Erfindung kann durch Zusätze von Weichmachern für das Alkydharz und/oder hochsiedende Lösungsmittel, vorzugsweise durch Phthalsäureester, Phosphorsäureester bzw. Polyglykoläther erheblich verbessert werden. Es ist zu beachten, dass diese Zusätze vorzugsweise auf das jeweilige Alkydharz als Weichmacher oder Lösungsmittel wirken. Bei einem Zusatz von mehr als 60% Weichmacher, z.B. mehr als 60% Dibutylphthalat, bleibt das Alkydharz weich; es gibt keinen festen Film.

*Tabelle 2*

*Verbesserung der Eindringtiefe unter zusätzlicher Mitverwendung von Weichmachern oder Lösungsmitteln*

Bei einem Zusatz von Dibutylphthalat (DBP) zu Mittel A (entsprechend der Erfindung) wurden folgende Eindringtiefen festgestellt:

(Die Gewichtsprozentsätze des eingesetzten Harzes sind in der Tabelle berechnet als Feststoff. Die Gewichtsprozentsätze des Weichmachers Dibutylphthalat beziehen sich auf die Gesamtmenge des eingesetzten Alkydharzes, d.h. auf 100 Gew.% Alkydharz.)

| | |
|---|---|
| 1. Mittel A mit 6% Harz ohne Zusatz | 10,1 mm |
| 2. Mittel A mit 6% Harz + 20% DBP | 11,1 mm |
| 3. Mittel A mit 6% Harz + 40% DBP | 11,9 mm |
| 4. Mittel A mit 6% Harz + 60% DBP | 12,7 mm |
| 5. Mittel A mit 9% Harz ohne Zusatz | 9,0 mm |
| 6. Mittel A mit 9% Harz + 20% DBP | 9,6 mm |
| 7. Mittel A mit 9% Harz + 40% DBP | 10,4 mm |
| 8. Mittel A mit 9% Harz + 60% DBP | 11,0 mm |

Aus diesen 8 Versuchen ist ersichtlich, dass mit einer Erhöhung des Alkydharzanteiles von 6% auf 9% jeweils eine Verringerung der Eindringtiefe festzustellen ist. Ähnliche Ergebnisse zeigen sich auch bei der Verwendung von höheren Alkydharzkonzentrationen des niedrigviskosen Alkydharzes, z.B. bei Verwendung von 12, 15 oder 20 Gew.-% usw. Durch Zusatz von Dibutylphthalat (DBP) mit 20%, 40% bzw. 60%, bezogen auf Festharz, wird die Eindringtiefe bis zu 25-30% verbessert.

Bei einem Zusatz von Dibutylphthalat DBP zu Mittel B (bisher eingesetzte höher molekulare Alkydharze der üblichen Zusammensetzung) wurden nachstehende Eindringtiefen bestimmt:

| | |
|---|---|
| 1. Mittel B mit 6% Harz ohne Zusatz | 6,6 mm |
| 2. Mittel B mit 6% Harz + 20% DBP | 7,6 mm |
| 3. Mittel B mit 6% Harz + 40% DBP | 8,3 mm |
| 4. Mittel B mit 6% Harz + 60% DBP | 8,8 mm |
| 5. Mittel B mit 9% Harz ohne Zusatz | 5,2 mm |
| 6. Mittel B mit 9% Harz + 20% DBP | 5,6 mm |
| 7. Mittel B mit 9% Harz + 40% DBP | 6,3 mm |
| 8. Mittel B mit 9% Harz + 60% DBP | 6,9 mm |

Auch bei dieser Versuchsserie ist eine Erhöhung der Eindringtiefen von 25-30% festzustellen. Zu berücksichtigen ist jedoch, dass bei dem Mittel A die Eindringtiefen generell um ca. 3-4 mm grösser sind als die der Mittel B.

Ausserdem ist besonders erstaunlich, dass die niedrigviskosen Alkydharze entsprechend der Erfindung als Film auf dem Holz eine auffallend hohe Wasserquellbeständigkeit zeigen.

Auch diese Ergebnisse zeigen, dass die Wirkstoffe tiefer in das Holz eindringen und dort von den niedrigviskosen Alkydharzen fixiert werden als die bisher verwendeten höherviskosen Alkydharze.

Im Rahmen der Erfindung wurde weiterhin festgestellt, dass niedrigviskose langölige Urethan-Alkydharze, insbesondere Leinöl-modifizierte Urethanalkydharze in Holzschutzmitteln eine hohe Eindringtiefe im Kiefernsplintholz (gemäss DIN 52618) bewirken. Erfindungsgemäss wurde weiterhin festgestellt, dass Holzschutzmittel, die niedrigviskose Urethan-Alkydharze gemäss der Erfindung enthalten, eine nachträgliche Verleimung der behandelten Hölzer zulassen.

Die nicht mit Diisocyanaten umgesetzten Alkydharze beeinträchtigen die Leimfestigkeit, so dass schon bei einem Harzanteil von 6-15 Gew.-% im Holzschutzmittel die Leimfestigkeit für Bauholz gefährdet ist.

Im Rahmen der Erfindung wurde überraschend festgestellt, dass niedrigviskose Urethan-Alkydharze mit einer Viskosität von 1.000-2.000 mPa·s, vorzugsweise 1.200-1.800 mPa·s, für holzschüt-

zende Grundiermittel besonders gut geeignet sind, insbesondere wenn eine nachträgliche Verleimung erfolgen soll.

Die Mittel zum Konservieren von Holz und Holzwerkstoffen auf der Basis dieser niedrigviskosen Urethanalkydharze zeigen ebenfalls eine hervorragende Eindringtiefe im behandelten Holz.

Ausserdem lassen die behandelten Hölzer in der Verleimungsprüfung keine oder keine merkliche Abnahme der Zugfestigkeit und des Holzausrisses bei der Leimfestigkeitsprüfung im Normalklima wie bei der Prüfung nach dem Kochtest erkennen (s. Tabelle 3). Dem Versuch wurde ein Mittel zum Konservieren von Holz folgender Zusammensetzung zugrunde gelegt.

| | |
|---|---|
| Pentachlorphenol | 5,5 Gew.-% |
| Lindan | 0,5 Gew.-% |
| aromatische Lösungsmittel vom Siedebereich: 180-210° C | 25,0 Gew.-% |
| Testbenzin vom Siedebereich: 180-215° C | 56,9 Gew.-% |
| Trockenstoff (Sikkativ) | 0,1 Gew.-% |
| Alkydharz mit Leinöl modifiziert | 12,0 Gew.-% |

Das Alkyldharz, das im Mittel I verwendet wurde, wies eine Viskosität von 2.500 mPa·s bei einem 60%igen Harzanteil im Testbenzin mit einem Siedebereich von 180-215° C, gemessen bei 20° C, auf. Das niedrigviskose ölmodifizierte Urethanalkydharz im Mittel II (gemäss der Erfindung) hatte eine Viskosität von 1.200 mPa·s (gemessen in Testbenzin) bei einem 90%igen Harzgehalt bei 20° C. Dabei ergaben sich folgende Werte der Eindringtiefen:

I. Mittel mit stark vorpolymerisiertem Alkydharz: 5,5 mm Eindringtiefe

II. Mittel mit niedrigviskosem Urethan-Alkydharz (gemäss Erfindung): 9,1 mm Eindringtiefe

*Prüfung des Einflusses auf die Verleimbarkeit (nach DIN 52179)*

Holzkonservierungsmittel I
(Basis stark vorpolymerisiertes Alkydharz):

| Einbring-mengen ($g/m^2$) | Zeit zwischen Imprägnierung und Verleimung | Prüfung im Normalklima Zugfestigkeit (Z) Holzausriss (A) | Prüfung nach Kochtest Zugfestigkeit (Z) Holzausriss (A) |
|---|---|---|---|
| 150 | 2 Tage | (Z) 24,7 $kg/cm^2$<br>(A) 5% | (Z) 15,7 $kg/cm^2$<br>(A) 5% |
| 150 | 7 Tage | (Z) 45,6 $kg/cm^2$<br>(A) 11% | (Z) 31,1 $kg/cm^2$<br>(A) 26% |

Holzkonservierungsmittel II
(Urethanalkydharz-Basis, niedrigviskos):

| Einbring-mengen ($g/m^2$) | Zeit zwischen Imprägnierung und Verleimung | Prüfung im Normalklima Zugfestigkeit (Z) Holzausriss (A) | Prüfung nach Kochtest Zugfestigkeit (Z) Holzausriss (A) |
|---|---|---|---|
| 75 | 2 Tage | (Z) 80,9 $kg/cm^2$<br>(A) 81% | (Z) 53,7 $kg/cm^2$<br>(A) 97% |
| 75 | 7 Tage | (Z) 76,3 $kg/cm^2$<br>(A) 89% | (Z) 50,9 $kg/cm^2$<br>(A) 96% |
| 150 | 2 Tage | (Z) 86,2 $kg/cm^2$<br>(A) 82% | (Z) 48,4 $kg/cm^2$<br>(A) 82% |
| 150 | 7 Tage | (Z) 67,6 $kg/cm^2$<br>(A) 86% | (Z) 46,8 $kg/cm^2$<br>(A) 96% |

Kontrolle mit unimprägnierten Hölzern:

| Einbring-mengen ($g/m^2$) | Zeit zwischen Imprägnierung und Verleimung | Prüfung im Normalklima Zugfestigkeit (Z) Holzausriss (A) | Prüfung nach Kochtest Zugfestigkeit (Z) Holzausriss (A) |
|---|---|---|---|
| — | — | (Z) 82,5 $kg/cm^2$<br>(A) 96% | (Z) 55 $kg/cm^2$<br>(A) 98% |

Die Erfindung betrifft weiterhin ein Verfahren zur Herstellung des Mittels zum Konservieren von Holz und Holzwerkstoffen, wobei in dem organisch-chemischen schwerflüchtigen Lösungsmittel bzw. Lösungsmittelgemisch die wasserunlöslichen Insektizide oder Insektizidgemische und/oder wasserunlöslichen Fungizide oder Fungizidgemische sowie die niedrigviskosen Alkydharze mit einer Viskosität von 1.100-1.200 mPa·s, gemessen in Testbenzin mit einem Siedebereich von 180-215° C, bei einem 80-100%igen Harzgehalt (bei einem 100%igen Harzgehalt ohne zusätzliche Lösungsmittel) bei 20° C, sowie ggf. einem Weichmacher oder Weichmachergemisch für das Alkydharz und/oder ein hochsiedendes Lösungsmittel für das Alkydharz bei Temperaturen von 0 bis +80° C, vorzugsweise 15° C bis 45° C, und bei Drücken von 400 mm Hg bis 850 mm Hg (0,5332 bis 1,1332 bar), vorzugsweise 600 mm Hg bis 790 mm Hg 0,7994 bis 1,0532 bar), so lange behandelt, gerührt und/oder erwärmt werden, bis eine Lösung entsteht und dabei oder nachfolgend entweder Sikkative bzw. Trockenstoffe für das Alkydharz unmittelbar zugefügt werden oder erst nachdem das Gemisch auf Raumtemperatur abgekühlt worden ist.

*Beispiel 1*

| | |
|---|---|
| Pentachlorphenol | 5,5 Gew.-% |
| Lindan | 0,5 Gew.-% |
| aromatische Lösungsmittel vom Siedebereich: 180-210° C | 25,0 Gew.-% |
| Testbenzin vom Siedebereich: 180-215° C | 59,9 Gew.-% |
| Trockenstoff (Sikkativ) | 0,1 Gew.-% |
| Alkydharz, mit Leinöl modifiziert, Ölgehalt ca. 70 Gew.-%, Feststoff gehalt 100%, Viskosität 1600 cP | 9,0 Gew.-% |

Das Mittel zeigt in der Prüfung nach DIN 52618 eine Eindringtiefe von ca. 6 mm.

Nach dem Abhobeln von 2 bzw. 4 mm ist bei dem behandelten Holz noch eine volle fungizide und insektizide Wirkung gegeben.

Die Wasserquellbeständigkeit ist durch das neue Alkydharz erheblich verbessert worden.

*Beispiel 2*

Holzschutzmittel mit besonders hoher Tiefenwirkung

| | |
|---|---|
| Pentachlorphenol | 5,5 Gew.-% |
| Lindan | 0,5 Gew.-% |
| Dibutylphthalat | 4,0 Gew.-% |
| Alkydharz (wie in Beispiel 1) | 9,0 Gew.-% |
| aromatische Lösungsmittel Siedebereich: 180-210° C | 25,0 Gew.-% |
| Testbenzin Siedebereich: 180-215° C | 55,9 Gew.-% |
| Trockenstoff | 0,1 Gew.-% |

Zum Unterschied zu Beispiel 1 enthält das Mittel 4% Dibutylphthalat. Durch diesen Zusatz wurde die Eindringtiefe von 9 mm auf 11 mm erhöht. In gleichem Masse erhöht sich auch die Tiefenwirkung des Mittels im Abhobeltest.

*Beispiel 3*

Imprägniermittel mit grundierenden Eigenschaften

| | |
|---|---|
| Dichlofluanid | 1,0 Gew.-% |
| Methyl-Dichlorfluanid | 1,2 Gew.-% |
| Propoxur | 1,0 Gew.-% |
| Phoxim | 1,0 Gew.-% |
| aromatische Lösungsmittel Siedebereich: 180-210° C | 75,6 Gew.-% |
| Leinölfirnis | 15,0 Gew.-% |
| Alkydharz (80%ig im Testbenzin) | 5,0 Gew.-% |
| Trockenstoff | 0,1 Gew.-% |
| Benzotriazol | 0,1 Gew.-% |

Das eingesetzte Alkydharz bestand aus einem Gemisch aus niedrigviskosen Alkydharzen mit einer Gesamtviskosität von 1.500 mPa·s, bestehend aus mit zweiwertigen Alkoholen verestertem Alkydharz und aus mit dreiwertigen Alkoholen verestertem Alkydharz im Gewichtsverhältnis 1:2.

Das Mittel hat eine hohe Eindringtiefe von ca. 10 mm. Durch den geringen Zusatz von 5% des Alkydharzes wird eine erhebliche Verbesserung der Wasserquellbeständigkeit des Harzfilms erzielt.

*Beispiel 4*

Holzschützende Grundiermittel mit Wirkung gegen Termiten

| | |
|---|---|
| Pentachlorphenol | 6,0 Gew.-% |
| Dichlofluanid | 0,5 Gew.-% |
| Dieldrin | 1,0 Gew.-% |
| Alkydharz auf Isophthalsäure-Basis mit Leinöl modifiziert, 90%ig in Testbenzin, Viskosität 1.200 mPa·s | 10,0 Gew.-% |
| Trockenstoff | 0,1 Gew.-% |
| aromatische Lösungsmittel Siedebereich: 180-210° C | 25,0 Gew.-% |
| Testbenzin Siedebereich: 180-215° C | 54,4 Gew.-% |
| Tributylphosphat | 3,0 Gew.-% |

Aufgrund des speziellen Alkydharzes auf Basis eines mit Leinöl modifizierten Isophthalatharzes und durch den Zusatz von Tributylphosphat hat das Mittel eine Eindringtiefe von ca. 10,5 mm und zeigt eine ausgezeichnete Wirkung gegen Insekten besonders Termiten.

*Beispiel 5*

Holzschutzmittel (leimverträglich)

| | |
|---|---|
| N-Cyclohexyl-N-methoxy-2,5-dimethylfuran-3-carbonsäureanilid | 1,5 Gew.-% |
| Lindan | 1,0 Gew.-% |
| Propoxur | 1,0 Gew.-% |
| Urethan-Alkydharz, 80%ig in Testbenzin Viskosität 1.250 mPa·s nach Erfindung | 12,0 Gew.-% |
| Trockenstoff | 0,1 Gew.-% |
| aromatische Lösungsmittel Siedebereich: 180-215° C | 84,4 Gew.-% |

Das Holzschutzmittel besitzt ein gutes Eindringvermögen für die Wirkstoffe mit guter fungizider und insektizider Wirkung. Das mit diesem Mittel

behandelte Holz lässt sich trotz des Alkydharzgehaltes einwandfrei verleimen.

*Beispiel 6*

Holzschützende Lasuranstrichmittel mit fungizider, insektizider und bläuewidriger Wirkung

| | |
|---|---|
| Dichlofluanid | 1,0 Gew.-% |
| Methyl-Dichlofluanid | 1,2 Gew.-% |
| Propoxur | 1,5 Gew.-% |
| Alkydharz, 100% Feststoffgehalt, mit Leinöl modifiziert, Visikosität 1.500 mPa·s | 18,0 Gew.-% |
| Pigmente (org. Pigmente Russ 100%) | 1,5 Gew.-% |
| Trockenstoffe | 0,2 Gew.-% |
| Netzmittel, Hautverhütungsmittel | 0,3 Gew.-% |
| aromatische Kohlenwasserstoffe Siedebereich: 180-210° C | 55,0 Gew.-% |
| Testbenzin Siedebereich: 180-215° C | 21,3 Gew.-% |

Das Anstrichmittel mit lasierendem Effekt hat mit 8 mm eine gute Eindringung nach DIN 52618 und besitzt wegen der hohen Eindringung der Wirkstoffe einen guten schützenden Effekt.

*Beispiel 7*

Holzschutzmittel mit fungizider und insektizider Wirkung

| | |
|---|---|
| Pentachlorphenol | 5,0 Gew.-% |
| Lindan | 1,0 Gew.-% |
| Kolophoniumharzester | 3,0 Gew.-% |
| Alkydharz mit Glykol verestert, 100% Feststoffgehalt, Viskosität 1.100 mPa·s | 5,0 Gew.-% |
| Testbenzin Siedebereich: 180-215° C | 86,0 Gew.-% |

Das Mittel ist ein insektizid vorbeugend und bekämpfend wirksames sowie pilzwidriges Holzschutzmittel, das ein Alkydharz auf Glykolesterbasis und Kolophoniumesterharz entsprechend der Erfindung als Fixierungsmittel enthält. Infolge der hohen Löslichkeit der Wirkstoffe in diesem Alkydharz wird eine sehr gute Tiefenwirkung und damit verbunden eine bessere Langzeitwirkung erzielt. Die Raumluftbelastung kann dadurch erstaunlicherweise drastisch gesenkt werden.

Die angegebenen Viskositäten wurden mit dem Rotationsviskosimeter unter Verwendung von Testbenzin mit einem Siedebereich von 180-215° C bei einem 80-100%igen Harzgehalt (bei 100% Harzgehalt ohne zusätzliches Lösungsmittel, also ohne Testbenzin) gemessen. Die Messtemperatur lag bei 20° C.

Ergänzend zur Charakterisierung des niedrigviskosen Harzes ergibt es sich, dass die Alkoholkomponente neben zwei- und dreiwertig auch vierwertig sein kann. Die Viskosität der 80 bis 100%igen Harze sollte zwischen den angegebenen Werten liegen. Das Mittel weist eine besonders gute Eindringung auf, wenn der prozentuale Anteil an Linolensäure im Vergleich zu Linolsäure und Ölsäure den Hauptteil der Fettsäuren ausmacht. Die hiermit verbundene grössere Vernetzbarkeit muss durch geringere Reaktionszeit und Reaktionstemperatur beim Kochprozess so ausgeglichen werden, dass die Viskosität sich in der vorgesteckten Grenze bewegt. Die OH-Zahl sollte vorzugsweise zwischen 50 und 60 liegen.

Fungizide und Insektizide zeigen in derartigen Alkydharzlösungen eine erstaunlich gute Löslichkeit, was einerseits dazu beiträgt, dass sie vom Harz sehr tief ins Holz mitgeschleppt werden und andererseits nicht zum Auskristallisieren neigen. An den Wirkstoffen Pentachlorphenol, Tributylzinnoxid (N-Cyclohexyl-diazeniumdioxy)metallverbindung (bzw. Salz des N-Nitroso-N-cyclohexylhydroxylamins), vorzugsweise deren Aluminiumverbindung, sowie Carbamate, insektizid wirksame chlorierte Kohlenwasserstoffe und Phosphorsäureester, vorzugsweise die insektizid wirksamen Alkoxyphenyl-N-alkyl-carbamate und/oder Alkyl-phenyl-N-alkyl-carbamate bzw. halogenierte oder halogengruppenfreie Thiophosphorsäureester bzw. -phosphonsäureester, sowie Lindan, konnte eine deutliche Verbesserung der Eindringtiefe im Holz festgestellt werden. Ein wesentlich grösserer Anteil des eingesetzten Fungizids bzw. Insektizids wird dadurch im Holz selbst zu finden sein und nur ein geringer Anteil auf der Oberfläche. Das hat zur Folge, dass auch die Raumluftbelastungen durch die abdampfenden Wirkstoffe wesentlich geringer sind. Ein dritter Vorteil liegt in der Langzeitwirkung der Fungizide und Insektizide. Durch eine geringere Abdampfrate ist folglich auch ein grösserer Teil an Wirkstoff über längere Zeit im Holz nachweisbar.

## Patentansprüche

1. Mittel zum Konservieren von Holz und Holzwerkstoffen, bestehend aus

I. mehr als 45, vorzugsweise mehr als 65 Gew.-%,

eines organischen, schwerflüchtigen Lösungsmittels oder Lösungsmittelgemisches mit einer Verdunstungszahl über 35 und einem Flammpunkt oberhalb 30° C,

II. 0,1-10, vorzugsweise 3-8 Gew.-%,

eines in dem Lösungsmittel löslichen Fungizides oder Fungizidgemisches und/oder

III. 0,3-8, vorzugsweise 1-5 Gew.-%,

eines in dem Lösungsmittel löslichen Insektizides oder Insektizidgemisches und

IV. 1-30, vorzugsweise 3-15 Gew.-%,

eines Alkydharzes (berechnet auf Feststoffgehalt), dadurch gekennzeichnet, dass als Alkydharz ein niedrigviskoses Alkydharz oder eine niedrigviskose Alkydharzlösung mit einer Viskosität von

1.000 bis 2.200, vorzugsweise
1.200 bis 1.800 mPa·s,

gemessen in Testbenzin mit einem Siedebereich von 180°-215° C, bei einem 80 bis 100%igen Harzgehalt (bei 100% Harzgehalt ohne zusätzliche Lösungsmittel (Testbenzin)) bei 20° C, wobei das Alkydharz mit einem trocknenden Öl modifiziert ist und mit einem oder mehreren zwei- oder dreiwertigen Alkoholen mit einer C-Zahl unter 8, vorzugsweise einer C-Zahl von 2 bis 5, verestert ist.

2. Mittel zum Konservieren von Holz und Holzwerkstoffen nach Anspruch 1, dadurch gekennzeichnet, dass als niedrigviskoses Alkydharz oder als niedrigviskose Alkydharzlösung ein langöliges Alkydharz oder ein langöliges Urethanalkydharz mit einem Ölgehalt von grösser als 60 Gew.-%, vorzugsweise mit einem Ölgehalt von 65 bis 80 Gew.-%, bezogen auf 100 Gew.-% Alkydharz, im Holzkonservierungsmittel enthalten ist.

3. Mittel zum Konservieren von Holz und Holzwerkstoffen nach den Ansprüchen 1 und 2, dadurch gekennzeichnet, dass in dem Holzschutzmittel ein Weichmacher für das Alkydharz und/oder ein hochsiedendes Lösungsmittel für das Alkydharz, vorzugsweise ein organischer Ester oder Glycoläther in Gew.-Mengen von 20 bis 60 Gew.-%, vorzugsweise 25 bis 50 Gew.-%, bezogen auf die Gesamtmenge des eingesetzten Alkydharzes (berechnet als Feststoff), enthalten ist.

4. Mittel zum Konservieren von Holz und Holzwerkstoffen nach den Ansprüchen 1 bis 3, dadurch gekennzeichnet, dass als niedrigviskoses Alkydharz oder als niedrigviskose Alkydharzlösung ein langöliges Alkydharz eingesetzt wird, das unter Mitverwendung von Isophthalsäure und/oder Terephthalsäure oder deren zu Alkydharz umsetzbaren Derivaten hergestellt wurde.

5. Mittel zum Konservieren von Holz und Holzwerkstoffen nach den Ansprüchen 1 bis 4, dadurch gekennzeichnet, dass das niedrigviskose Alkydharz bzw. die niedrigviskose Alkydharzlösung in dem Holzkonservierungsmittel
1 bis 40 Gew.-%, vorzugsweise
5 bis 25 Gew.-%,
(berechnet auf 100 Gew.-% Alkydharz-Feststoff), durch ein höherviskoses bzw. stark vorkondensiertes Alkydharz ersetzt ist.

6. Mittel zum Konservieren von Holz und Holzwerkstoffen nach den Ansprüchen 1 bis 5, dadurch gekennzeichnet, dass als höherviskoses Alkydharz ein Alkydharz verwendet wird, das in einer ca. 60%igen Lösung in Testbenzin mit einem Siedebereich von 180 bis 215° C, eine Viskosität von grösser als 2.200 mPa·s, gemessen bei 20° C, aufweist.

7. Verfahren zur Herstellung des Mittels zum Konservieren von Holz und Holzwerkstoffen nach einem der Ansprüche 1 bis 6, dadurch gekennzeichnet, dass in dem organisch-chemischen schwerflüchtigen Lösungsmittel bzw. Lösungsmittelgemisch die wasserunlöslichen Insektizide oder Insektizidgemische und/oder wasserunlöslichen Fungizide oder Fungizidgemische sowie die niedrigviskosen Alkydharze mit einer Viskosität von 1.000-2.200 mPa·s, vorzugsweise 1.200-1.800 mPa·s, gemessen in Testbenzin mit einem Siedebereich von 180-215° C, bei einem 80-100%igen Harzgehalt (bei 100%igem Harzgehalt ohne zusätzliche Lösungsmittel) bei 20° C, sowie ggf. einem Weichmacher oder Weichmachergemisch für das Alkydharz und/oder ein hochsiedendes Lösungsmittel für das Alkydharz bei Temperaturen von
0° C bis + 80° C, vorzugsweise
15° C bis 45° C,
und bei Drücken von
400 mm Hg bis 800 mm Hg (0,5332 bis 1,1332 bar),
vorzugsweise
600 mm Hg bis 790 mm Hg (0,7994 bis 1,0532 bar),
so lange behandelt, gerührt und/oder erwärmt werden, bis eine Lösung entsteht und dabei oder nachfolgend entweder Sikkative bzw. Trockenstoffe für das Alkydharz unmittelbar zugefügt werden oder erst nachdem das Gemisch auf Raumtemperatur abgekühlt worden ist.

## Claims

1. Agent for the preservation of wood and wood materials, consisting of
I. more than 45, preferably more than 65%-wt.,
of an organic, difficulty volatilisable solvent or solvent mixture with an evaporation number over 35 and a flashpoint above 30° C,
II. 0.1-10, preferably 3-8%-wt.
of a fungicide or fungicide mixture, soluble in the solvent and/or
III. 0.3-8, preferably 1-5%-wt.
of an insecticide or insecticide mixture, soluble in the solvent and
IV. 1-30, preferably 3-15%-wt.
of an alkyd resin (calculated on solids content), characterised in that the alkyd resin is a low-viscosity alkyd resin or a low-viscosity alkyd resin solution with a viscosity of
1,000 to 2,000, preferably
1,200 to 1,800 mPa·s,
measured in white spirit with a boiling range of 180°-215° C, at a 80 to 100% resin content (at 100% resin content without additional solvent (white spirit)) at 20° C, the alkyd resin being modified with a drying oil and esterified with one or more divalent or trivalent alcohols with a C-number below 8, preferably a C-number of 2 to 5.

2. Agent for the preservation of wood and wood materials according to Claim 1, characterised in that as low-viscosity alkyd resin or as low-viscosity alkyd resin solution a long oil alkyd resin or a long oil urethane alkyd resin with an oil content of greater than 60%-wt., preferably with an oil content of 65 to 85%-wt., in relation to 100%-wt., alkyd resin, is contained in the wood preservative agent.

3. Agent for the preservation of wood and wood materials according to Claims 1 and 2, characterised in that a plasticiser for the alkyd resin and/or a high boiling solvent for the alkyd resin, preferably an organic ester or glycol ether in weight quantities of from 20 to 60%-wt., preferably 25 to 50%-wt., in relation to the total quantity

of the alkyd resin used (calculated as solids), is contained in the wood preservative agent.

4. Agent for the preservation of wood and wood materials according to Claims 1 to 3, characterised in that as low-viscosity alkyd resin or as low-viscosity alkyd resin solution a long oily alkyd resin is used, which was produced with the co-use of isophthalic acid and/or terephthalic acid or their derivatives which are able to be converted to alkyd resin.

5. Agent for the preservation of wood and wood materials according to Claims 1 to 4, characterised in that the low-viscosity alkyd resin or the low-viscosity alkyd resin solution in the wood preservative agent

1 to 40%-wt., preferably
5 to 25%-wt.

(calculated on 100%-wt., alkyd resin-solids) is replaced by a higher-viscosity or intensively pre-condensed alkyd resin.

6. Agent for the preservation of wood and wood materials according to Claims 1 to 5, characterised in that as higher-viscosity alkyd resin an alkyd resin is used, which in an approximately 60% solution in white spirit with a boiling range of 180 to 215° C has a viscosity of greater than 2,200 mPa·s, measured at 20° C.

7. Method for the manufacture of the agent for the preservation of wood and wood materials according to one of Claims 1 to 6, characterised in that in the organic difficulty volatilisable solvent or solvent mixture, insecticides or insecticide mixtures and/or water insoluble fungicides or fungicide mixtures as well as the low-viscosity alkyd resins with a viscosity of 1,000-2,200 mPa·s, preferably 1,200- 1,800 mPa·s, measured in white spirit with a boiling range of 180-215° C, at a 80 to 100% resin content (at 100% resin content without additional solvent) at 20° C, and if required with a plasticiser or plasticiser mixture for the alkyd resin and/or a high boiling solvent for the alkyd resin at temperatures of

0° C to 80° C, preferably
15° C to 45° C,

and at pressure of

400 mm Hg to 850 mm Hg (0.5332 to 1.1332 bar),

preferably

600 mm Hg to 790 mm Hg (0.7994 to 1.0532 bar),

are treated, stirred and/or heated until a solution results, and then or subsequently either siccatives or drying substances for the alkyd resin are added immediately or only after the mixture has been cooled down to room temperature.

## Revendications

1. Agent de conservation de bois et de pièces de bois consistant en

I. plus de 45, de préférence
plus de 65% en poids,

d'un solvant ou mélange de solvants organique peu volatil ayant un indice d'évaporation supérieur à 35 et un point d'éclair supérieur à 30° C,

II. 0,1-10, de préférence
3-8% en poids,

d'un fongicide ou mélange de fongicides soluble dans le solvant et/ou

III. 0,3-8, de préférence
1-5% en poids,

d'un insecticide ou mélange d'insecticides soluble dans le solvant et

IV. 1-30, de préférence
3-15% en poids,

d'une résine alkyde (calculé en poids de matière solide), caractérisé en ce qu'on emploie comme résine alkyde une résine alkyde de basse viscosité ou une solution de résine alkyde de basse viscosité ayant une viscosité de 1000 à 2200, de préférence de 1200 à 1800 mPa·s, mesurée dans du white spirit ayant un intervalle d'ébullition de 180-215° C, pour une teneur en résine de 80 à 100% (sans solvant supplémentaire (white spirit) dans le cas d'une teneur en résine de 100%) à 20° C, ladite résine alkyde étant modifiée au moyen d'une huile siccative et étant estérifiée par un ou plusieurs alcools bi- ou trivalents ayant un nombre d'atomes de carbone inférieur à 8, de préférence un nombre d'atomes de carbone compris entre 2 et 5.

2. Agent de conservation de bois et de pièces de bois suivant la revendication 1, caractérisé en ce qu'il contient comme résine alkyde de basse viscosité ou comme solution de résine alkyde de basse viscosité une résine alkyde longue en huile ou une résine d'uréthanne-alkyde longue en huile ayant une teneur en huile de plus de 60% en poids, de préférence de 65 à 80% en poids, par rapport à 100% en poids de résine alkyde.

3. Agent de conservation de bois et de pièces de bois suivant les revendications 1 et 2, caractérisé en ce qu'il contient un plastifiant de la résine alkyde et/ou un solvant à haut point d'ébullition pour la résine alkyde, de préférence un ester organique ou un éther de glycol en des quantités de 20 à 60% en poids, de préférence de 25 à 50% en poids, par rapport à la quantité totale de la résine alkyde mise en œuvre (calculée comme produit solide).

4. Agent de conservation de bois et de pièces de bois suivant les revendications 1 à 3, caractérisé en ce qu'on emploie comme résine alkyde de basse viscosité ou comme solution de résine alkyde de basse viscosité une résine alkyde longue en huile qui a été fabriquée en utilisant de l'acide isophtalique et/ou de l'acide téréphtalique ou leurs dérivés convertibles en résine alkyde.

5. Agent de conservation de bois et de pièces de bois suivant les revendications 1 à 4, caractérisé en ce que la résine alkyde de basse viscosité ou la solution de résine alkyde de basse viscosité est remplacée dans ledit agent, jusqu'à concurrence de 1 à 40% en poids, de préférence de 5 à 25% en poids (calculé sur 100% en poids de résine alkyde à l'état de matière solide), par une résine alkyde de plus haute viscosité ou par une résine alkyde fortement précondensée.

6. Agent de conservation de bois et de pièces de bois suivant les revendications 1 à 5, caractérisé en ce qu'on emploie, comme résine alkyde de plus haute viscosité, une résine alkyde présentant, à l'état d'une solution à environ 60% dans du white spirit ayant un intervalle d'ébullition de 180 à 215° C, une viscosité supérieure à 2200 mPa·s, mesurée à 20° C.

7. Procédé de fabrication de l'agent de conservation de bois et de pièces de bois suivant l'une des revendications 1 à 6, caractérisé en ce que les insecticides ou mélanges d'insecticides insolubles dans l'eau et/ou les fongicides ou mélanges de fongicides insolubles dans l'eau, ainsi que les résines alkydes de basse viscosité ayant une viscosité de 1000-2200 mPa·s, de préférence 1200-1800 mPa·s mesurée dans du white spirit ayant un intervalle d'ébullition de 180-215° C, pour une teneur en résine de 80-100% (sans solvant supplémentaire dans le cas de la teneur en résine de 100%) à 20° C, ainsi qu'éventuellement un plastifiant ou mélange de plastifiants de la résine alkyde et/ou un solvant à haut point d'ébullition pour la résine alkyde sont traités, agités et/ou chauffés dans le solvant ou mélange de solvants organique peu volatil, à des températures de 0° C à 80° C, de préférence de 15° C à 45° C, et sous des pressions de 400 mm Hg à 850 mm Hg (0,5332 à 1,332 bar), de préférence de 600 mm Hg à 790 mm Hg (0,7994 à 1,0532 bar), jusqu'à ce qu'il se forme une solution et en ce que, pendant ou après cette opération, on ajoute des siccatifs de la résine alkyde soit immédiatement soit après avoir refroidi le mélange à la température ambiante.